# EUROPEAN PATENT SPECIFICATION

(11) **EP 0 895 497 B1**
(45) Date of publication and mention of the grant of the patent: **28.12.2005**
(21) Application number: 96912046.8
(22) Date of filing: 26.04.1996
(51) Int. Cl.: B60P 1/16

(54) **DRAWBAR COUPLING**
DEICHSELKUPPLUNG
DISPOSITIF D'ACCOUPLEMENT POUR TIMON

(30) Priority: 21.02.1996 WO PCT/FI96/00101
(43) Date of publication of application: 10.02.1999
(73) Proprietor: OUNASLEHTO, Erkki, 26510 Rauma (FI)
(72) Inventor: OUNASLEHTO, Erkki, 26510 Rauma (FI)
(74) Representative: Nieminen, Taisto Tapani
(86) International application number: PCT/FI1996/000227
(87) International publication number: WO 1997/030866

(56) References cited:
- WO-A-82/01521
- DE-A- 2 444 082
- PATENT ABSTRACTS OF JAPAN, Vol. 7, No. 120, M-217; & JP,A,58 039 539 (KYOKUTO KAIHATSU KOGYO K.K.), 8 March 1983.
- DERWENT'S ABSTRACT, No. 92-364318/44, Week 9244; & SU,A,1 701 579 (CAR ENGINE RES INST), 30 December 1991.

## Description

The invention relates to a drawbar coupling between a vehicle and its semi-trailer, which coupling can be used also for coupling semi-trailer platform bodies to horizontally turning semi-trailer axle assemblies.

Previously known is a turn table between semi-trailer and drawing vehicle, on which table the front end of the semi-trailer rests on the drawing vehicle. The turn table is a level top on which the counterface of the semi-trailer front end is turning when the drawing vehicle and semi-trailer have different directions. The turn table is articulated to swing about the transvers axle in the vehicle so that on driving the coupling allows the semi-trailer to yield up-and-down in regard to the dwawing vehicle.

In semi-trailers a ring gear is known, by means of which front axle assembly is coupled to the semi-trailer platform body. The front axle assembly must be steerable and thus turnable in regard to the platform body. The ring gear does not allow any tilt of platform with respect to the axle assembly but only horizontal turning, i.e. turning round vertical axle.

GB publication 292 208 discloses a coupling for coupling in a turnable manner a semi-trailer platform to a vehicle chassis according to the preamble of claim 1. The coupling is formed as a spherical joint comprising a ball-shaped part inside another ball-shaped housing thus allowing any inclination with limitations. This coupling has very small bearing area being not suitable for heavy loads.

The disadvantage of the above mentioned coupling means, which allow turning, is that they do not allow any tilt at all or allow in one direction only. Since roads and especially the terrain are often uneven, the vehicle supension has to even out all vertical deviations of vehicle and semi-trailer, when they are in turned positions in regard to each other. Likewise, the front axle assembly of the semi-trailer itself is stiff in all turned positions in regard to the platform body and the suspension alone equalizes the impacts of terrain roughness. As the coupling of semi-trailer to the drawing vehicle does not in turned position allow any tilting, it leads in rough terrain to wheel jump-up, torsion and cranking in the turn table and great stress to the suspension. Same exertions also effect a full trailer, when its front axle assembly is turned in rough terrain.

With the coupling means according to this invention a decisive improvement of the above presented disadvantages is reached. The invention is characterized in what is presented in the enclosed independent claim.

The most important advantages of the invention can be considered the facts that the drawbar coupling is easily discoupled, it allows tilting in all directions and, upon need, tilting can be restricted with its coupling means. These tilt restricting means are used also for discoupling the coupling upon need, lifting off the coupling part by them. Ball lubrication is easy from the lubricant supply along special lubrication channels, for instance. Further, by means of the coupling assembly, tilt restriction can be adjusted with regard to different turning angles and thus improve keeping vehicle combinations upright.

In the following the invention is disclosed with reference to the enclosed drawing, where
Fig. 1 shows a cross section of a drawbar coupling not forming part of the invention by means of which a platform body is coupled to the chassis frame.
Fig. 2 shows a cross section of the coupling in figure 1 viewed from another angle.
Fig. 3 shows a drawbar coupling according to the invention.

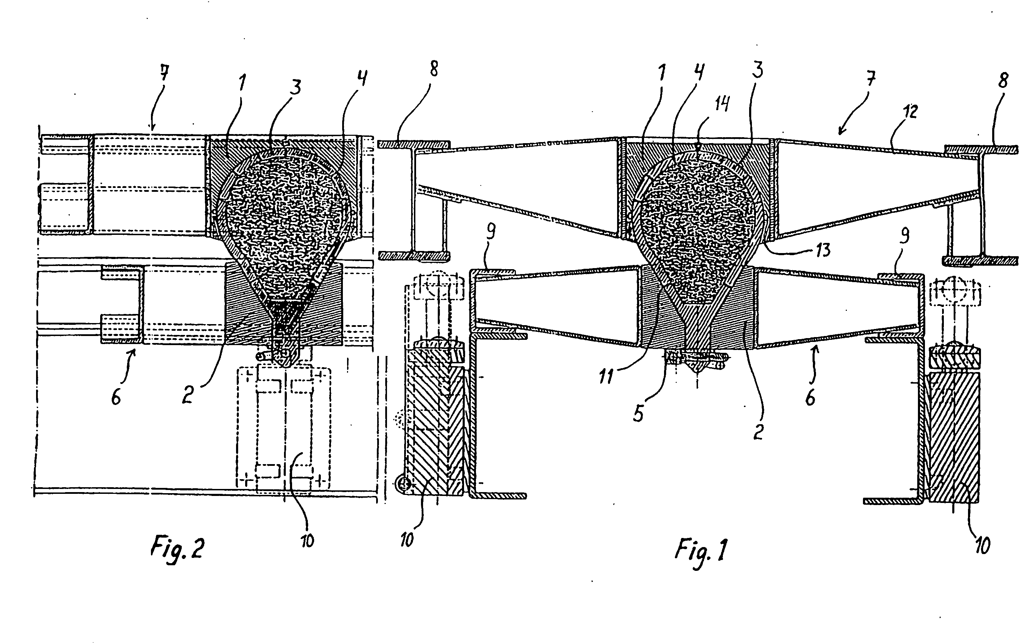

Figure 1 is a platform body 7 comprising side beams 8 and intermediate beams 12 connecting them in this projection. Under platform body 7 the vehicle chassis 6 is showned comprised of side beams 9 and also inermediate beams joining them is this porjection. Side beams 9 are separate beams mounted on the ordinary beams, whereat it is easy to mount the coupling assembly even later on, for instance in the drawing vehicle chassis. In the lower part on the intermediate beams a socket 2 e.g. of cast iron is fitted. Into it for coupling means 11 a conical space is rotary-cut. The coupling has a closure pin 5 in its lower end. In the upper frame 7 between intermediate beams 12 a ball housing, most suitably of cast iron, is 1 fitted. The housing has a detachable collar part 13, by means of which the coupling ball has been locked into to housing. The ball is of steel or steel-cast, at first cast or formed e.g. as two halves and joined together as a ball. Inside the ball there is.lubrication entering onto the sliding surface along channels 4. Through connection 14 more lubrication can be fed to the sliding surface or pressure conveyed into the ball: in order to intensify the travel of lubrication. To the proper side beams of the vehicle cylinders 10 are fastened, by means of which, in lifting the side beams 8, the coupling means can be lifted off, for instance in order to uncouple the semi-trailer. The cylinders can.also function as tilt restrictors when they are adjusted to a proper from beams 8. In the cylinder tops there are rolls or sliding pieces, since chassis 6 and platform body 7 can during restriction turn with respect to each other.

Tilt restriction is necessary especially whith the drawing vehicle and the semi-trailer in the same direction as per figure 1. Even high platforms used by then remain stabil all the time during driving, because they are supported from their front part by the drawing vehicle. If one wants to support the platform also in other mutual turning positions of the drawing vehicle and the semi-trailer, the number of cylinders is increased to four, for instance, and arranged as a ring about the pull clutch. In the lower face of beams 8 a ring gear is fastened on the same radius as the cylinders, whereat by means of cylinders 10 the platform body can be supported against the ring gear in all semi-trailer turning positions. The height of cylinders 10, i.e. height of piston exit, is adjusted individually, for instance according the the height of the platform body angle. Cylinders 10 are connected to the control system adjusting the level of the cylinders. The smallest tilt is arranged in the position of straight-forward driving as per figure 1.

When the drawbar coupling is coupled to the turning axle assembly of the semi-trailer the above mentioned ring gear about the pull switch in the lower surface of body 7 is used. The cylinders, 4 ea or more, are arranged according to the ring gear and their height is also controlled so that by straight forward driving minimum tilt is allowed. The pull switch can come into question especially in contex with a semi-trailer steering front axle assembly but the semi-trailer rear axle assembly can also be made turnable, for instance by means of the above mentioned pull switch and tilt restrictors. The bottom face of above mentioned ring gear can be formed wavelike, whereat all cylinders can be at same height. Between the ring gear bottom side and cylinder tops tilt tolerance is arranged in wanted ring gear positions.

Figure 2 shows a cross-section of the coupling perpendicular to the figure 1 section. The lifting and restricting cylinders 10 are on both sides by the coupling.

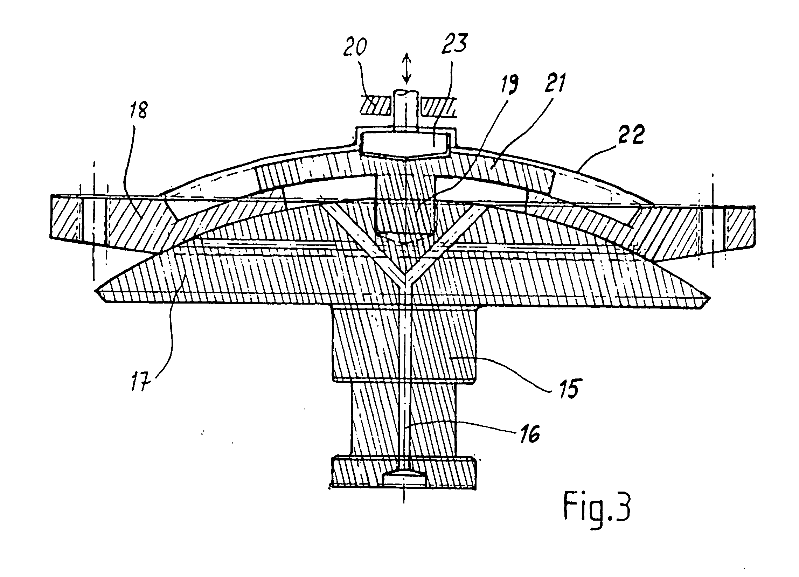

Figure 3 shows an embodiment of the invention with ball calotte 17 as sliding face. In the platform body a circular counter part 18 is fastened to glide on the ball calotte. Separation between these faces is prevented by part 21 fastened to ball calotte 17 by means of threaded part 19. Ring 18 glides also partly under part 21. Lubricant is brought along channel 16 from socket part 15.

The coupling can be locked stiff by pressing piston 23 into the centre hole of part 21. The piston rod 23 takes its support from platform body 20.

Each introduced drawbar coupling type can also be mounted upside down, whereby the slide face becomes converted, whereby even the socket part 15 is turned upward and fastened to the,platform body. In this case the coupling and its slide faces are in the vehicle.

## Claims

1. A drawbar coupling for coupling a semi-trailer platform body in turnable manner to a drawing vehicle chassis or for coupling said platform body in turnable manner to a semi-trailer chassis located on an axle assembly, the drawbar coupling comprising a
ball-shaped coupling (17, 21), an interacting ball-shaped counter part (18) to be mounted to either
said platform on the chassis and a socket part (15) for joining said ball-shaped coupling the other of said platform body and
said chassis, **characterized in that** the ball-shaped coupling comprises a ball-shaped calotte (17), on which another ball-shaped calotte (21) is fastened at a distance
so that said interacting ball-shaped counter part (18) is able to glide between said ball-shaped calottes (17, 21) allowing said platform body to turn in any angles in relation to said chassis.

2. A drawbar coupling according to claim 1 **characterized in that** said calottes (17, 21) are fitted together at a distance by means of a threaded pin (19).

3. A drawbar coupling according to claim 1 **characterized in that** the coupling can be discoupled by lifting the socket part (15) off from its counter-part.

4. A drawbar coupling according to claim 1 **characterized in that** from the inside of ball-shaped calotte (17) there are lubrication channels (16) to its sliding face.

5. A drawbar coupling according to claim 1 **characterized in that** there it comprises lifting cylinders (10) for lifting the platform body (7) and separating socket part (15) from its counter-part.

6. A drawbar coupling according to claim 5 **characterized in that** one or several of the lifting cylinders (10) are mountable to function as platform body (7) tilt restrictor.

7. A drawbar coupling according to claim 6 **characterized in that** the lifting cylinders (10) are mountable to restrict the tilt of the platform body (7) with respect to the drawing vehicle chassis at least when the platform body (7) has the same direction as the drawing vehicle has.

## Patentansprüche

1. Eine Zugkopplung zur drehbaren Kuppelung der Ladefläche eines Halbanhängers an das Chassis eines Zugfahrzeuges oder zur drehbaren Kuppelung der erwähnten Ladefläche an das Chassis eines Halbanhängers auf Achsen, wobei der Zugkopplung aus einem kugelförmigen Kopplung (17,21) besteht, und aus einem interaktiven kugelförmigen Gegenstück (18) um entweder in die erwähnte Ladefläche oder in das Chassis und ein Fassungsteil (15) montiert zu werden, wegen Einpassen der kugelförmigen Zugkopplung an die erwähnte andere Ladefläche und an das erwähnte Chassis, **gekennzeichnet dadurch, dass,** die Zugkopplung eine kugelförmigen Kappe (17) hat, auf der eine andere kugelförmige Kappe(,21) mit Abstand befestigt ist, damit das interaktive kugelförmige Gegenstück (18) zwischen den erwähnten kugelförmigen Kappen (17,21) gleiten kann und, die erwähnte Ladefläche in jeder Winkelrichtung hinsichtlich des erwähnten Chassis drehen lässt.

2. Ein Zugkopplung gemäss Patentanspruch 1 **gekennzeichnet dadurch, dass** die erwähnten Kappen (17, 21) mit Hilfe eines Gewindestifts (19) zusammen mit abstand festgemacht werden.

3. Ein Zugkopplung gemäss Patentanspruch 1 **gekennzeichnet dadurch, dass** der Zugkopplung aus ihrem Gegenstück, einfach durch Heben des Fassungsteils (15) losgemacht werden kann.

4. Ein Zugkopplung gemäss Patentanspruch 1 **gekennzeichnet dadurch, dass** es auf der Innenseite der kugelförmigen Kappe (17) Schmierkanäle (16) zu ihrer Gleitfläche gibt.

5. Ein Zugkopplung gemäss Patentanspruch 1 **gekennzeichnet dadurch, dass** sie zum Heben der Ladefläche (7) und zur Trennung des Fassungsteils (15) von seinem Gegenstück Abhebezylinder (10) hat.

6. Ein Zugkopplung gemäss Patentanspruch 1 **gekennzeichnet dadurch, dass** ein oder mehrere Abhebezylinder (10) zum Funktionieren als Kippsperre der Ladefläche (7) montiert werden können.

7. Ein Zugkopplung gemäss Patentanspruch 1 **gekennzeichnet dadurch, dass** die Abhebezylinder (10) zum Begrenzen das Kippen der Ladefläche im Verhältnis zum Chassis des Zugfahrzeugs wenn die Ladefläche (7) wenigstens die gleiche Richtung wie das Zugfahrzeug hat.

## Revendications

1. Une barre d'accouplement pour atteler la plate-forme d'une semi-remorque au châssis d'un véhicule de remorquage de façon à ce qu'elle puisse tourner, ou pour atteler, de façon à ce qu'elle puisse tourner, la dite plate-forme au châssis d'une semi-remorque reposant sur un ensemble essieu, cet ensemble barre d'accouplement comprenant une attache à bille (17, 21), un autre élément sphérique correspondant (18) entrant en interaction avec celle-là et devant être monté soit sur la dite plate-forme, soit sur le châssis, ainsi qu'une douille (15) pour accoupler la dite attache à bille à l'élément sphérique de la dite plate-forme et du dit châssis, **caractérisée en ce que** l'attache à bille présente une calotte sphérique (17) sur laquelle est fixée une autre calotte sphérique (21) à une distance grâce à laquelle l'élément sphérique interdépendant (18) peut glisser entre les dites calottes sphériques (17, 21), ce qui permet à la dite plate-forme de tourner en tout angle par rapport au dit châssis.

2. Une barre d'accouplement selon la revendication 1, **caractérisée en ce que** les dites calottes (17, 21) sont assemblées à une distance au moyen d'une cheville filetée (19).

3. Une barre d'accouplement selon la revendication 1, **caractérisée en ce que** l'accouplement peut être désaccouplé en ôtant la douille (15) de dessus de son élément sphérique interdépendant (18).

4. Une barre d'accouplement selon la revendication 1, **caractérisée en ce qu'**il y a, à l'intérieur de la calotte sphérique (17), des canaux de lubrification (16) aboutissant à sa face de glissement.

5. Une barre d'accouplement selon la revendication 1, **caractérisée en ce qu'**il y a des vérins de levage (10) pour lever la plate-forme (7) et séparer la douille (15) de l'élément sphérique interdépendant.

6. Une barre d'accouplement selon la revendication 5, **caractérisée en ce qu'**un ou plusieurs vérins de levage (10) peuvent être montés de façon à fonctionner comme limiteur du basculement pour la plate-forme (7).

7. Une barre d'accouplement selon la revendication 6, **caractérisée en ce que** les vérins de levage (10) peuvent être montés de façon à ce qu'ils limitent le basculement de la plate-forme (7) par rapport au châssis du véhicule de remorquage au moins lorsque la plate-forme (7) se trouve en ligne avec le véhicule de remorquage.
